# EUROPÄISCHE PATENTSCHRIFT

(11) **EP 0 563 081 B1**
(45) Veröffentlichungstag und Bekanntmachung des Hinweises auf die Patenterteilung: **08.03.1995**
(21) Anmeldenummer: 92900185.7
(22) Anmeldetag: 07.12.1991
(51) Int. Cl.: B01D 45/10, B01D 45/08

(54) **VERFAHREN ZUM REINIGEN EINES TROPFENABSCHEIDERS UND TROPFENABSCHEIDER MIT REINIGUNGSVORRICHTUNG**
PROCESS FOR CLEANING A DROP SEPARATOR AND DROP SEPARATOR WITH CLEANING DEVICE
PROCEDE POUR LE NETTOYAGE D'UN SEPARATEUR DE GOUTTELETTES ET SEPARATEUR DE GOUTTELETTES AVEC DISPOSITIF DE NETTOYAGE

(30) Priorität: 21.12.1990 DE 4041165
(43) Veröffentlichungstag der Anmeldung: 06.10.1993
(73) Patentinhaber: Wolf, Hubert, D-40668 Meerbusch (DE); Wurz, Dieter, Prof. Dr.-Ing., D-76530 Baden-Baden (DE)
(72) Erfinder: WURZ, Dieter, D-7570 Baden-Baden (DE); HARTIG, Stefan, D-7590 Achern 2 (DE); WOLF, Hubert, D-4005 Meerbusch (DE)
(74) Vertreter: Döring, Wolfgang, Dr.-Ing. Patentanwälte Hauck, Graalfs, Wehnert, Döring, Siemons
(86) Internationale Anmeldenummer: EP9102348
(87) Internationale Veröffentlichungsnummer: WO9211075

(56) Entgegenhaltungen:
- DE-A- 2 318 217
- DE-C- 3 434 133
- FR-A- 2 224 193

## Beschreibung

Hinter jedem Gaswäscher ist i.a. ein Tropfenabscheider angeordnet; u.a. hinter dem ersten Wäscher einer zweistufigen Gaswaschanlage, z.B. zur Rauchgasreinigung mit einem ersten Wäscher zur Entfernung von Staub und ggf. HCl und einem zweiten Wäscher zur Entfernung von SO₂.

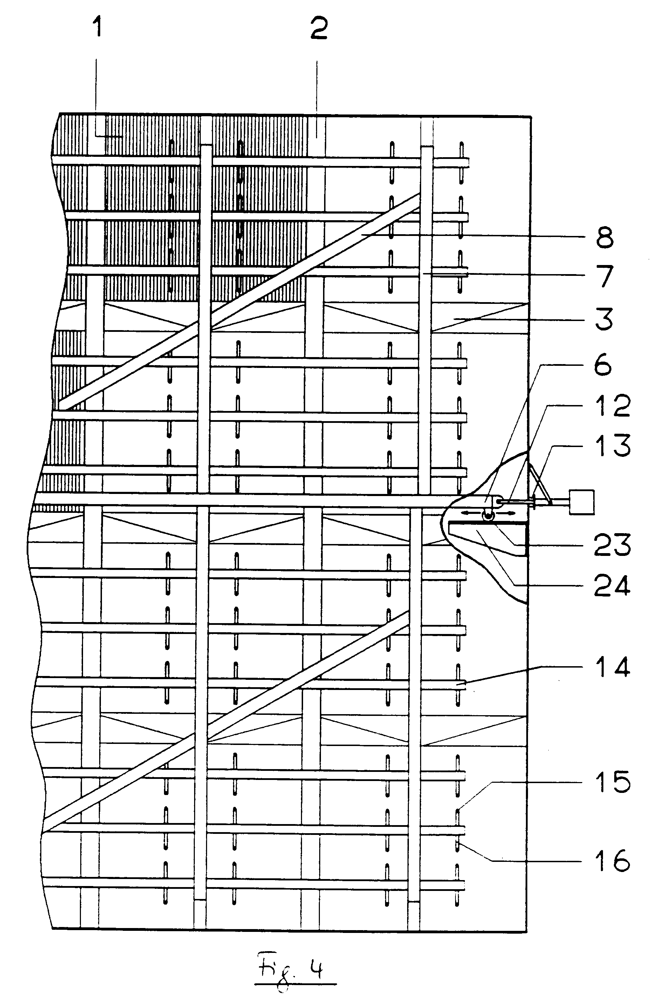

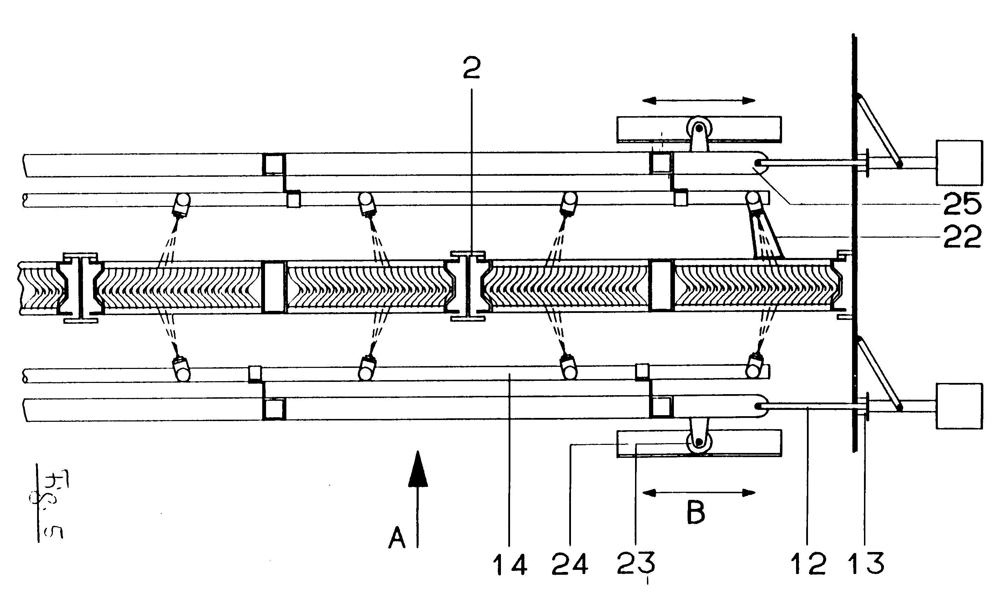

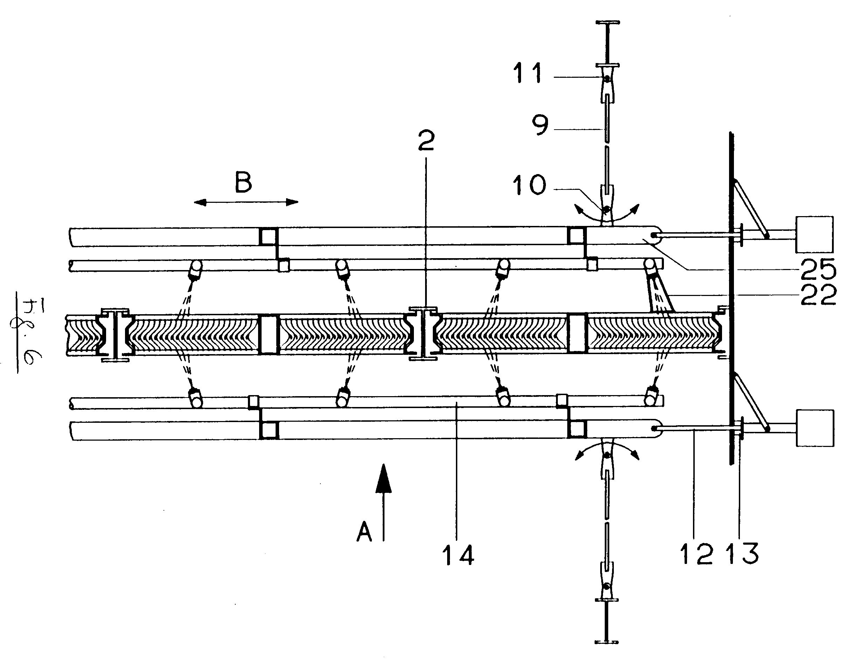

Ein Tropfenabscheider weist über den gesamten Querschnitt eines Gaskanales, z.B. eines Rauchgaskanales, parallel zueinander angeordnet, in Rauchgasrichtung gekrümmte Bleche, Abscheidebleche oder Lamellen genannt, auf. Die Anordnung der Lamellen ist z.B. aus "Perry's Chemical Engineering's Handbook, Sixth Edition, Figur 18-110 (b)" oder aus der Schrift "Hochwirksame Tropfenabscheider bei der Rauchgasreinigung (Sonderdruck aus Heft 1/83 Chemische Industrie)" bekannt. An den als Prallflächen wirkenden Lamellen fließen die im Gas vorhandenen oder an den Lamellen abgeschiedenen Tropfen herab. Das Problem bei derartigen Tropfenabscheidern ist, daß sich dabei auf den Lamellen Ablagerungen bilden, die den Tropfenabscheider mit der Zeit zusetzen.

Zur Abreinigung eines Tropfenabscheiders ist aus der o.g. Schrift bekannt, den Tropfenabscheider mit einer Reinigungsvorrichtung zu versehen, die mit im Rauchgaskanal fest installierten Düsen bestückt ist. Die in Rauchgasströmung vor, ggf. auch hinter, den Lamellen angeordneten Düsen sind Vollkegeldüsen, deren Kegel den gesamten Querschnitt des Rauchgaskanales überdecken (vgl. Abb. 4). Die Abreinigung findet in Intervallen statt, in denen die Lamellen mit den Düsen entsprechenden, kegelförmigen Reinigungsstrahlen mit Waschwasser besprüht und gespült werden.

Insbesondere bei Rauchgas mit hohem Flugascheanteil, wie z.B. hinter einem älteren Elektrofilter, ist die Abreinigung durch diese Düsenanordnung unzureichend. Der Tropfenabscheider verstopft schnell und es kommt häufig zu längeren Stillständen, in denen die Ablagerungen z.B. mit Hochdruckwasser oder Preßluft entfernt werden müssen. In den schlimmsten Fällen muß der Tropfenabscheider ausgewechselt werden.

Ein wesentlicher Nachteil der Abreinigung mit stationären Kegeldüsen besteht darin, daß die Abscheidebleche von den kegelförmigen Reinigungsstrahlen nicht gleichmäßig getroffen werden. Es bilden sich Schlagschatten, von denen das Zusetzen des Tropfenabscheiders ausgeht.

Die erste Aufgabe der Erfindung ist, ein Verfahren zum Reinigung eines Tropfenabscheiders gemäß dem Oberbegriff des Anspruchs 1 mit einer besseren Abreinigungswirkung zu entwickeln. Die zweite Aufgabe der Erfindung besteht darin, einen Tropfenabscheider gemäß dem Oberbegriff des Anspruchs 5 so weiter zu entwickeln, daß er zur Durchführung des Verfahrens nach Anspruch 1 geeignet ist.

Die erste Aufgabe wird durch die kennzeichnenden Merkmale des Anspruchs 1 gelöst.

Beim erfindungsgemäßen Verfahren werden die parallel zueinander angeordneten und in Gasrichtung gekrümmten Lamellen des Tropfenabscheiders gereinigt, indem flach ausgebildete Reinigungsstrahlen senkrecht zur Längserstreckung der Lamellen und senkrecht zur Gasrichtung über die Lamellen verschoben werden.

Dabei werden die Lamellen von den Reinigungsstrahlen mit gleicher Stärke und gleichem Winkel überstrichen. Im Gegensatz dazu nimmt die Stärke eines kegeligen, stationären Strahles vom Zentrum des Strahles nach außen hin ab. Dadurch werden die verschiedenen von einem Strahl getroffenen Lamellen mit unterschiedlicher Stärke und unterschiedlichem Winkel angestrahlt, was zu den erwähnten Schlagschatten führt. Ein wesentlicher Vorteil ist daher, daß Schlagschatten, d.h. Bereiche, die nicht oder nur mit geringer Stärke von den Reinigungsstrahlen getroffen werden, weitestgehend vermieden werden.

Außerdem werden weniger Düsen benötigt. Auch die pro Intervall benötigte Wassermenge ist gegenüber der bei der Abreinigung mit stätionären, kegelförmigen Reinigungsstrahlen benötigten Wassermenge geringer.

Ein weiterer Vorteil des Verfahrens besteht in der Verwendung von flachen Reinigungsstrahlen, deren Stärke, und damit deren mechanische Abreinigungswirkung, wesentlich größer ist als die von kegeligen Reinigungsstrahlen. Außerdem kann der Anströmwinkel bei der Verwendung von flachen Reinigungsstrahlen so auf die Anordnung der Lamellen eingestellt werden, daß weitestgehend alle verschmutzungsgefährdeten Teilbereiche der Lamellen erreicht werden.

Das Verschieben von flachen Reinigungsstrahlen gemäß Anspruch 1 führt daher zu einer gleichmäßigeren, mechanisch verstärkten Abreinigung der Lamellen und damit zu längeren Standzeiten des Tropfenabscheiders.

Bei dem Verfahren gemäß Anspruch 2 werden die Lamellen in Schwingungen versetzt, was zu einer weiteren Verstärkung des Abreinigungsprozesses führt.

Bei einem Verfahren gemäß Anspruch 3 wird der Abreinigungsprozeß durch einen erosiv wirkenden Stoff im Waschwasser, wie z.B. Sand, verstärkt.

Bei einem Verfahren gemäß Anspruch 4 wird der Abreinigungsprozeß durch Lösen der Ablagerungen mit Hilfe eines zusätzlichen Stoffes im Waschwasser, wie z.B. Salzsäure, verstärkt.

Das Kennzeichen des Anspruchs 5 löst die zweite Aufgabe.

Durch die Anordnung der Düsenrohre auf einem im wesentlichen senkrecht zur Längserstreckung der Lamellen und senkrecht zur Gasrichtung beweglichen Rahmen wird ermöglicht, daß die Reinigungsstrahlen während eines Intervalls mit Hilfe eines einfachen Linearantrieb über die Lamellen verschoben werden.

Flexible Schläuche gleichen den durch die Bewegung unterschiedlichen Abstand der Düsenrohre zur Zufuhr von Waschwasser aus.

Die Flachstrahldüsen, die so angeordnet sind, daß senkrecht zur Längserstreckung der Lamellen und senkrecht zur Gasrichtung ein flacher Strahl und in den Ebenen parallel zu den Lamellen ein aufgefächerter Strahl ausgebildet ist, bewirken einen hohen mechanischen Abreinigungseffekt.

Gemäß Anspruch 6 ist der Rahmen der Reinigungsvorrichtung über Pendelstangen mit einer Befestigungsvorrichtung, z.B. einem Träger, im Gaskanal oder mit einer Kanaldecke verbunden. Der Vorteil einer Verschiebbarkeit des Rahmens durch eine Pendelanordnung ist, daß der Rahmen auch bei Verschmutzung beweglich bleibt. Das Merkmal des Anspruchs 6 ist besonders für einen horizontal angeströmten Tropfenabscheider geeignet.

Gemäß Anspruch 7 ist der Rahmen der Reinigungsvorrichtung mit einem Fahrwerk verbunden. Eine Verschiebbarkeit des Rahmens über ein Fahrwerk zu ermöglichen, ist eine einfache Lösung. Das Merkmal des Anspruchs 7 ist besonders für einen vertikal angeströmten Tropfenabscheider geeignet.

Vorteil des Merkmals des Anspruchs 8 ist die einfache Verbindung des Rahmens mit dem Linearantrieb.

Vorteil des Merkmals des Anspruchs 9 ist die einfache Verbindung der Schläuche mit der Zufuhr von Waschwasser.

Vorteil des Merkmals des Anspruchs 10 ist, daß mehrere Düsenrohre durch einen Schlauch versorgt werden. Ein Tropfenabscheider nach Anspruch 10 ist besonders für Gaskanäle mit kleineren Querschnitten geeignet.

Durch die Mundstücke gemäß Anspruch 11 wird verhindert, daß die Reinigungsstrahlen durch die Gasströmung aufgefächert werden. Dies führt zu einer Erhöhung der Abreinigung. Die Anordnung von Mundstücken ist besonders in Rauchgasrichtung hinter den Lamellen wirksam und damit für einen Tropfenabscheider mit hinter den Lamellen angeordneten Düsen geeignet, weil hier die Reinigungsstrahlen gegen die Richtung der Gasströmung die Oberfläche der Lamellen erreichen müssen.

Ein weiterer positiver Effekt der Mundstücke liegt darin, daß durch die Mundstücke die von den Reinigungsstrahlen getroffenen Bereiche des Tropfenabscheiders abgedeckt werden, so daß der Tropfenabscheider in diesen Bereichen nicht von der die Tropfen teilweise mitreißenden Gasströmung passiert wird.

Durch einen einstellbaren Anströmwinkel der Flachstrahldüsen gemäß Anspruch 12, kann der Abreinigungsprozeß weiter verbessert werden.

Vorteil des Anspruchs 13 ist, daß am Ende eines Intervalls die Waschflüssigkeit nicht ausläuft.

Die Erfindung soll anhand von in der Zeichnung schematisch dargestellten Ausführungsbeispielen weiter erläutert werden.

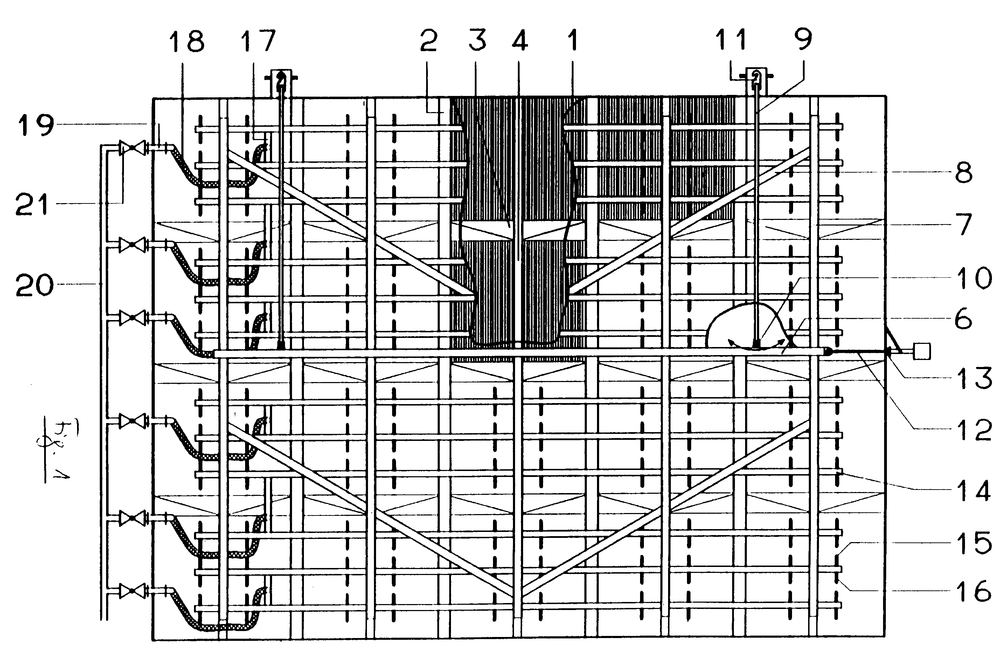

Das Beispiel 1, ein horizontal angeströmter Tropfenabscheider mit einer Reinigungsvorrichtung, ist in den Figuren 1 bis 4 dargestellt, wobei Figur 1 eine Seitenansicht auf die Reinigungsvorrichtung vor dem Tropfenabscheider, Figur 2 einen Teil eines vertikalen Schnittes des Tropfenabscheiders mit Reinigungsvorrichtung und Figur 3 einen Teil eines horizontalen Schnittes zeigt.

In Figur 4 ist eine Variante des Beispiels 1 dargestellt.

Das Beispiel 2, ein vertikal angeströmter Tropfenabscheider mit einer Reinigungsvorrichtung, ist in Figur 5 und eine Variante des Beispiels 2 in Figur 6 dargestellt.

### Beispiel 1:

Ein zwischen einem ersten und einem zweiten Wäscher einer Rauchgasreinigungsanlage in einem Rauchgaskanal angeordneter, horizontal angeströmter Tropfenabscheider weist eine den Querschnitt des Rauchgaskanales bedeckende Abscheidevorrichtung mit vier Etagen auf, wobei in jeder Etage fünf Lamellenpakete 1 nebeneinander angeordnet sind. Die Lamellenpakete 1 werden durch zwischen den Lamellenpaketen 1 angeordnete, über alle Etagen senkrecht nach unten verlaufende Träger 2 getragen. Unter den Lamellenpaketen 1 befinden sich Wassersammelkästen 3 und in ihrer Mitte Profile 4, wobei die Wassersammelkästen 3 in die Profile 4 der darunter angeordneten Lamellenpakete 1 münden.

Insgesamt weist der Tropfenabscheider zwanzig Lamellenpakete 1 auf. Die durch die Träger 2, die Wassersammelkästen 3 und die Profile 4 belegten Flächen sind ebenso wie die Ränder der Abscheidevorrichtung in Rauchgasströmung vor und hinter der Abscheidervorrichtung verblendet.

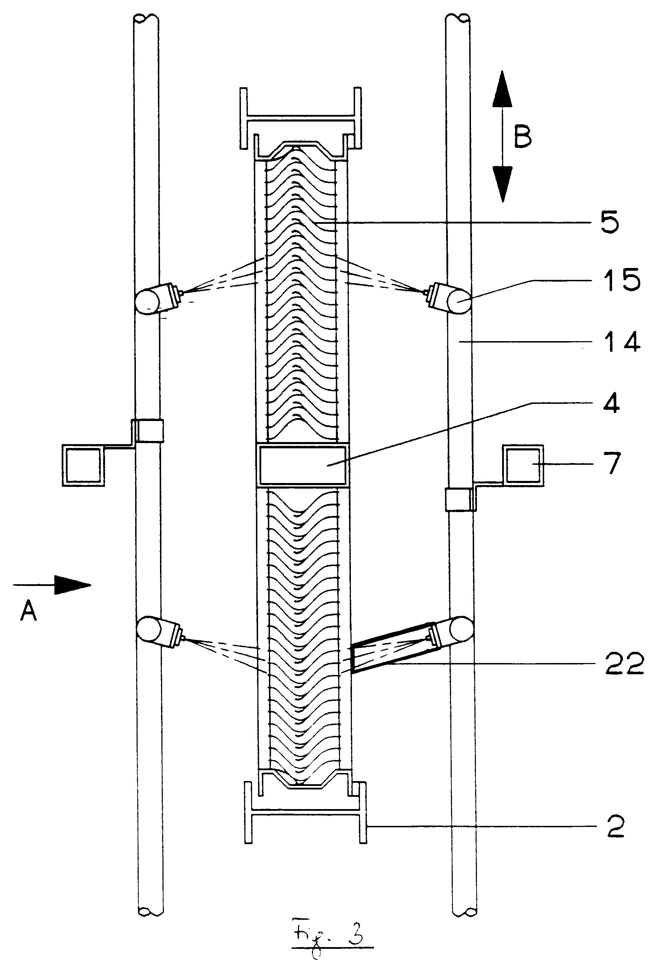

In den Lamellenpaketen 1 sind Lamellen 5, die ein in Rauchgasrichtung (Pfeil A) gekrümmtes Profil mit einer sogenannten Abführnase am Krümmungsscheitel aufweisen, parallel zueinander angeordnet. Die Lamellen 5 der beiden durch das Profil 4 unterteilten Hälften eine Lamellenpaketes 1 sind spiegelbildlich zueinander angeordnet (Figur 3).

Eine Reinigungsvorrichtung des Tropfenabscheiders weist in Rauchgasrichtung vor und hinter der Abscheidevorrichtung jeweils einen Rahmen auf.

Ein Rahmen weist ein Mittelprofil 6, an dem jeweils fünf nach oben und unten verlaufende Tragprofile 7 befestigt sind, auf. Zur Verstärkung der Stabilität des Rahmens sind die Tragprofile 7 miteinander und mit dem Mittelprofil 6 durch Verstärkungsprofile 8 verbunden. In diesem Fall bilden die Verstärkungsprofile 8 ein oberes und unteres "V".

Der Rahmen ist über zwei Pendelstangen 9 an einer Decke des Rauchgaskanales befestigt. Die Pendelstangen 9 sind über Gelenke 10 mit dem Mittelprofil 6 und über weitere Gelenke 11 mit der Decke des Rauchgaskanales verbunden. Dadurch ist der Rahmen im Rauchgaskanal beweglich angeordnet.

Das Mittelprofil 6 ist mit einer Antriebsstange 12 verbunden. Die Antriebsstange 12 ist über eine Stopfbuchse 13 durch eine Wand des Rauchgaskanales geführt und an einem Linearantrieb, z.B. einem Spindelantrieb, angeschlossen. Der Antrieb kann elektrischer, hydraulischer oder pneumatischer Art sein.

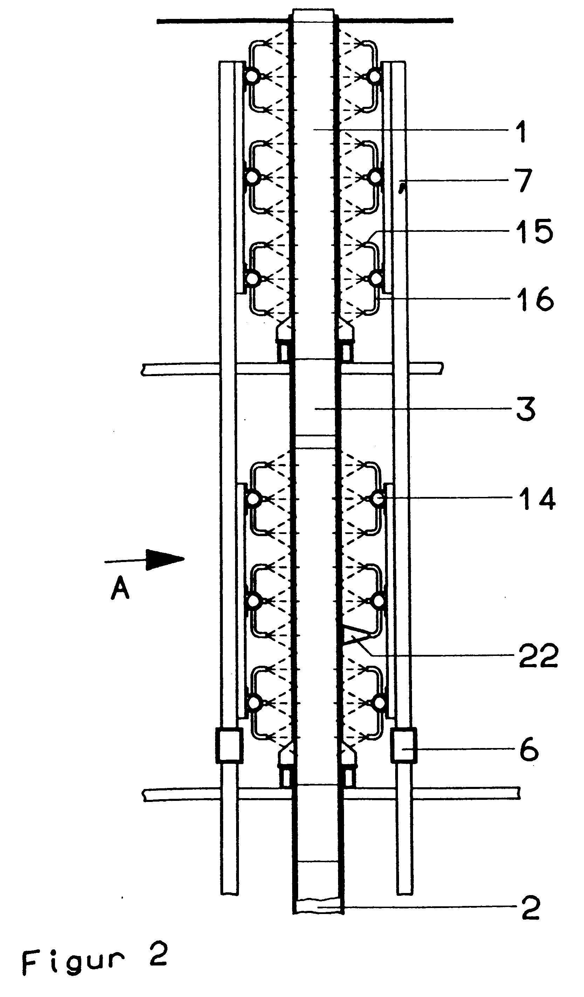

An den Tragprofilen 7 sind in jeder Etage drei zueinander parallele, senkrecht zu den Lamellen 5 verlaufende Düsenrohre 14 angeordnet. Symmetrisch auf beiden Seiten eines Tragprofiles 7 befindet sich auf einem Düsenrohr 14 eine Düsenanordnung mit drei Flachstrahldüsen 15, die auf nach oben und unten vom Düsenrohr 14 ausgehenden Auslegearmen 16 und am Düsenrohr 14 montiert sind (Figur 2). Auf einem Düsenrohr 14 befinden sich daher dreißig Flachstrahldüsen 15.

Die Reinigungsvorrichtung ist so vor der Abscheidevorrichtung angeordnet, daß die Tragprofile 7 vertikal über die Mitte der Lamellenpakete 1 verlaufen. Der Abstand zwischen den Düsenanordnungen an beiden Seiten eines Tragprofiles 7 eines Düsenrohres 14 beträgt etwas weniger als die halbe Breite eines Lamellenpaketes 1. Der Abstand zwischen den Flachstrahldüsen 15 einer Düsenanordnung und der Abstand der unteren Flachstrahldüse 15 eines oberen Düsenrohres 14 und der oberen Flachstrahldüse 15 des in dieser Etage darunterliegenden Düsenrohres 14 ist gleich groß.

Die Flachstrahldüsen 15 sind so ausgebildet, daß ein Anströmwinkel der Reinigungsstrahlen von 0 bis 15 ° einstellbar ist. Eingestellt ist ein Winkel von 10 °. Dabei sind die Strahlrichtungen der Flachstrahldüsen 15 der beiden Hälften eines Lamellenpaketes 1 spiegelsymmetrisch auseinandergespreizt, so daß die Reinigungsstrahlen zwischen die gekrümmten Lamellen 5 zielen (Figur 3).

In diesem Beispiel sind jeweils zwei Düsenrohre 14 über Verbindungsrohre 17 miteinander verbunden. An diese insgesamt sechs Verbindungsrohre 17 sind Schläuche 18 angeschlossen. Diese Schläuche 18 sind an in eine Wand des Rauchgaskanales eingelassene Anschlußstutzen 19 angeschlossen. Außen vor der Wand befindet sich eine Zufuhrleitung 20 für Waschwasser, die sich über Magnetventile 21 in die Anschlußstutzen 19 verzweigt.

Bei einer Variante des Tropfenabscheiders sind ausgehend von den Flachstrahldüsen 15 zu den Lamellen 5 verlaufende, flachtrichterförmige Mundstücke 22 vorgesehen. Vorzugsweise sind diese Mundstücke 22 nur in Rauchgasrichtung hinter der Abscheidevorrichtung angebracht. In Figur 3 ist exemplarisch ein Mundstück 22 für eine Flachstrahldüse 15 eingezeichnet.

Bei einer weiteren Variante sind die beiden Rahmen jeweils mit einem Fahrwerk, das zwei Räder 23 und zwei Halterungen 24 aufweist, verbunden. Die Halterungen 24 sind an den Wänden des Rauchgaskanales befestigt und mit Laufflächen, auf denen sich die Räder befinden, versehen. Die Räder 23 sind jeweils unter den Mittelprofilen 6 an deren Enden befestigt (Figur 4).

Bei einer weiteren Variante sind alle Flachstrahldüsen 15 auf nach oben gerichteten Auslegerahmen 16 angeordnet.

Im Betrieb wird die Reinigung des Tropfenabscheiders in zwei Intervallen pro Stunde durchgeführt. Während eines Intervalles werden jeweils auf beiden Seiten der Abscheidevorrichtung die sechs Magnetventile 21 nacheinander geöffnet, so daß in einem ersten Spülprozeß die durch das jeweils erste Magnetventil 21 angesteuerten Flachstrahldüsen 15 der oberen beiden Düsenrohre 14 in Betrieb sind, im zweiten Intervall die durch das zweite Magnetventil 21 angesteuerten Flachstrahldüsen 15 des dritten Düsenrohres 14 der oberen Etage und des ersten Düsenrohres 14 der zweiten Etage in Betrieb, usw. Jedes Magnetventil 21 ist 2 min geöffnet, d.h. die Dauer eines Spülprozesses beträgt 2 min und die eines Intervalls 12 min.

Bei einem Vordruck von 4 bar beträgt die Leistung einer Flachstrahldüse 15 30 l/min. Bei dreißig Flachstrahldüsen 15 pro Düsenrohr 14 beträgt die Leistung pro Magnetventil 21 900 l/min und die gesamte Wassermenge für beide Seiten in einem Intervall 7200 l.

Während der Spülprozesse bewegt jeweils der Linearantrieb das Mittelprofil 6 mit einer Geschwindigkeit von 5 bis 15 mm/s, z.B. 9 mm/s, in horizontaler Richtung senkrecht zur Rauchgasrichtung, wobei die in Bewegungsrichtung (Pfeil B) und damit senkrecht zu den Lamellen 5, flachen Reinigungsstrahlen die Lamellen 5 jeweils einer Hälfte eines Lamellenpaketes 1 überstreichen. Die Reinigungsstrahlen sind außerdem in der Eigenfrequenz der Lamellen 5 gepulst.

Dem Waschwasser kann erosiv wirkender Feststoff, z.B. Sand, und/oder Stoffe, z.B. Salzsäure, die die Ablagerungen chemisch lösen, beigemischt werden.

Die Anzahl der benötigten Düsen ist um das Fünf- bis Zehnfache und die pro Intervall benötigte Menge Waschwasser um das Zwei- bis Dreifache geringer verglichen mit einem Reinigungsverfahren, bei dem stationäre, vollkegelförmige Reinigungsstrahlen verwendet werden.

### Beispiel 2:

Ein vertikal angeströmter Tropfenabscheider des Beispiels 2 ist z.B. hinter einem Gegenstromwäscher einer Rauchgasreinigungsanlage angeordnet.

Er unterscheidet sich von dem des Beispiels 1 in folgenden Punkten:
Die Abscheidevorrichtung weist keine Wassersammekästen 3 auf.

Zusätzlich zu den Mittelprofilen 6 weisen die Rahmen auf beiden Seiten der Mittelprofile 6 und parallel zu diesen je zwei Antriebsprofile 25 auf. Jedes Antriebsprofil 25 ist mit einer Antriebsstange 12 verbunden. Die Antriebsstangen 12 sind (wie bei Beispiel 1) über eine Stopfbuchse 13 durch eine Wand des Rauchgaskanales geführt und an einen Linearantrieb angeschlossen.

Die Rahmen sind mit Fahrwerken, die Räder 23 und Halterungen 24 aufweisen, verbunden. Die Räder 23 für den unteren Rahmen sind unter den Antriebsprofilen 25 und die Räder für den oberen Rahmen über den Antriebsprofilen 25 befestigt. Die Räder 23 befinden sich auf Laufflächen bzw. bei dem oberen Rahmen unter Laufflächen der Halterungen 24.

Bei einer Variante des Tropfenabscheiders sind die Rahmen der Reinigungsvorrichtung, und zwar die Antriebsprofile 25 über Gelenke 10, mit Pendelstangen 9 verbunden. Die Pendelstangen 9 sind über weitere Gelenke 11 mit Trägern im Rauchgaskanal oder, ggf. beim oberen Rahmen, mit der Decke des Rauchgaskanales verbunden.

## Patentansprüche

1. Verfahren zum Reinigen eines Tropfenabscheiders, bei dem über den Querschnitt eines Gaskanales parallel zueinander angeordnete, in Gasrichtung gekrümmte Lamellen (5) durch in Gasrichtung und ggf. in entgegengesetzte Richtung zielende Reinigungsstrahlen mit Waschwasser besprüht werden, dadurch gekennzeichnet, daß die Reinigungsstrahlen in sowohl zur Längserstreckung der Lamellen (5) wie auch zur Gasrichtung senkrechter Richtung über diese verschoben werden, in dieser Richtung flach ausgebildet sind und gepulst werden.

2. Verfahren nach Anspruch 1, dadurch gekennzeichnet, daß die Pulsfrequenz der Eigenfrequenz der Lamellen (5) entspricht.

3. Verfahren nach einem der Ansprüche 1 oder 2, dadurch gekennzeichnet, daß dem Waschwasser erosiv wirkender Feststoff beigemischt wird.

4. Verfahren nach einem der Ansprüche 1 bis 3, dadurch gekennzeichnet, daß dem Waschwasser die Ablagerung chemisch lösende Stoffe beigemischtwerden.

5. Tropfenabscheider mit parallel zueinander über den Querschnitt eines Gaskanales angeordneten, in Gasrichtung gekrümmten Lamellen (5) und mit einer Reinigungsvorrichtung mit einseitig, ggf. beidseitig, der Lamellen (5), auf Düsenrohre (14) angeordneten Düsen, dadurch gekennzeichnet, daß
- die Reinigungsvorrichtung einen, ggf. zwei, Rahmen aufweist,
- die Düsenrohre (14) auf dem, ggf. den Rahmen angeordnet sind, und über flexible Schläuche (18) mit einer Zufuhrleitung (20) für Waschwasser verbunden sind,
- die Düsen Flachstrahldüsen (15) sind, die so angeordnet sind, daß senkrecht zur Längserstreckung der Lamellen und senkrecht zur Gasrichtung ein flacher Strahl ausgebildet ist und
- die Rahmen im Gaskanal im wesentlichen senkrecht zur Längserstreckung der Lamellen (5) und senkrecht zur Gasrichtung beweglich angeordnet sind, und jeweils an mindestens einen Linearantrieb angeschlossen sind.

6. Tropfenabscheider nach Anspruch 5, gekennzeichnet durch mindestens eine Pendelstange (9), die jeweils sowohl mit dem Rahmen als auch mit einer Befestigungsvorrichtung im Gaskanal oder einer Decke des Gaskanals gelenkig verbunden ist.

7. Tropfenabscheider nach Anspruch 5, gekennzeichnet durch ein mit dem Rahmen verbundenes und im Gaskanal befestigtes Fahrwerk.

8. Tropfenabscheider nach einem der Ansprüche 5 bis 7, dadurch gekennzeichnet, daß der Rahmen über eine Antriebsstange (12), die durch eine Stopfbuchse (13) durch eine Kanalwand geführt ist, mit dem Linearantrieb verbunden ist.

9. Tropfenabscheider nach einem der Ansprüche 5 bis 8, dadurch gekennzeichnet, daß sich die Zufuhr von Waschwasser in außen mit Ventilen versehenen Anschlußstutzen (19) verzweigt, wobei die Schläuche (18) an die Anschlußstutzen (19) angeschlossen sind.

10. Tropfenabscheider nach einem der Ansprüche 5 bis 9, dadurch gekennzeichnet, daß je zwei oder mehrere Düsenrohre (14) über Verbindungsrohre (17) miteinander verbunden sind, wobei die Schläuche (18) an die Verbindungsrohre (17) angeschlossen sind.

11. Tropfenabscheider nach einem der Ansprüche 5 bis 10, dadurch gekennzeichnet, daß die Flachstrahldüsen (15) mit flachtrichterförmigen Mundstücken (22) versehen sind.

12. Tropfenabscheider nach einem der Ansprüche 5 bis 11, dadurch gekennzeichnet, daß die Flachstrahldüsen (15) auf einen Anströmwinkel von 0 bis 15° einstellbar sind.

13. Tropfenabscheider nach einem der Ansprüche 5 bis 12, dadurch gekennzeichnet, daß die Flachstrahldüsen (15) auf nach oben gerichteten Auslegearmen (16) angeordnet sind.

## Claims

1. A method for cleaning a drop separator according to which blades (5) curved in the direction of gas flow and located mutually parallel over the cross-section of a gas channel are sprayed with wash water by means of cleaning jets directed into the direction of gas flow and, if necessary, into the opposite direction, characterized in that the cleaning jets are displaced perpendicularly with respect to the longitudinal direction of the blades (5) and perpendicularly with respect to the direction of gas flow over the blades, that the cleaning jets are formed flat in this direction and are pulsed.

2. The method according to claim 1, characterized in that the pulse frequency corresponds to the natural frequency of the blades (5).

3. The method according to one of the claims 1 or 2, characterized in that an abrasive solid substance is admixed to the wash water.

4. The method according to one of the claims 1 to 3 characterized in that substances are admixed to the wash water which are adapted to chemically dissolve the deposits.

5. A drop separator comprising blades (5) curved in the direction of gas flow and located mutually parallel over the cross-secti on of a gas channel and a cleaning device having nozzles disposed on nozzle pipes (14) on one side, if necessary, on both sides of the blades (5), characterized in that
- the cleaning device has one frame, if necessary, two frames,
- the nozzle pipes (14) are disposed on the frame, if necessary, on the frames and are connected to a supply line (20) for wash water by means of flexible hoses (18),
- the nozzles are flat jet nozzles (15) which are disposed such that a flat jet is formed perpendicularly to the longitudinal direction of the blades and perpendicularly to the direction of gas flow, and
- the frames are movably disposed in the gas channel substantially perpendicularly to the longitudinal direction of the blades (5) and perpendicularly to the direction of gas flow and are connected to at least one linear drive.

6. The drop separator according to claim 5, characterized by at least one swinging bar (9) pivotally connected with the frame and with an actuating means in the gas channel or a cover of the gas channel.

7. The drop separator according to claim 5, characterized by a moving means connected to the frame and mounted within the gas channel.

8. The drop separator according to one of the claims 5 to 7, characterized in that the frame is connected to the linear drive by means of a driving rod (12) extending through a channel wall by means of a packing box (13).

9. The drop separator according to one of the claims 5 to 8, characterized in that the supply of wash water is branched into connection pieces (19) provided with valves on the outside, wherein the hoses (18) are connected to the connection pieces (19).

10. The drop separator according to one of the claims 5 to 9, characterized in that two ore more nozzle pipes (14) are connected with one another by means of connection pipes (17), respectively, wherein the hoses (18) are connected to the connection pipes (17).

11. The drop separator according to one of the claims 5 to 10, characterized in that the flat jet nozzles (15) are provided with mouthpieces (22) formed as flat funnels.

12. The drop separator according to one of the claims 5 to 11, characterized in that the flat jet nozzles (15) are adjustable to provide an impact angle of the jets from 0 to 15°.

13. The drop separator according to one of the claims 5 to 12, characterized in that the flat jet nozzles (15) are disposed on upwardly directed extension arms (16).

## Revendications

1. Procédé pour nettoyer un séparateur de gouttes, selon lequel on asperge des lamelles (5) disposées parallèlement au-dessus de la section d'une arrivée de gaz et pliées dans la direction du gaz, avec de l'eau de lavage sous forme de jets de lavage dirigés dans la direction de gaz et, le cas échéant, dans la direction opposée, caractérisé en ce que les jets de lavage sont décalés perpendiculairement, aussi bien par rapport à l'étendue longitudinale des lamelles (5) que par rapport à la direction de gaz au-dessus de celles-ci, en ce qu'ils sont plans dans cette direction et en ce qu'ils sont produits par impulsions.

2. Procédé selon la revendication 1, caractérisé en ce que la fréquence d'impulsions correspond à la fréquence propre des lamelles (5).

3. Procédé selon l'une des revendications 1 ou 2, caractérisé en ce qu'on ajoute à l'eau de lavage une matière solide à effet érosif.

4. Procédé selon l'une des revendications 1 à 3, caractérisé en ce qu'on ajoute à l'eau de lavage le sédiment de substances à dissolution chimique.

5. Séparateur de gouttes comportant des lamelles (5) disposées en parallèle au-dessus de la section d'une arrivée de gaz et pliées dans la direction du gaz, et comportant un dispositif de nettoyage équipé de buses disposées sur des lances (14) sur un côté, le cas échéant sur les deux côtés des lamelles (5), caractérisé en ce que
- le dispositif de nettoyage comporte un, le cas échéant deux cadres,
- les lances (14) sont disposées sur le, le cas échéant les cadres et reliées par l'intermédiaire de tuyaux souples (18) à une conduite d'alimentation (20) en eau de lavage,
- les buses sont du type à jet plan (15) disposées de façon à produire un jet plan, perpendiculairement par rapport à l'étendue longitudinale des lamelles, et perpendiculairement par rapport à la direction du gaz, et
- les cadres sont disposés dans l'arrivée de gaz de façon mobile et essentiellement perpendiculairement par rapport à l'étendue longitudinale des lamelles (5) et perpendiculairement par rapport à la direction du gaz, chacun étant relié à au moins une commande linéaire.

6. Séparateur de gouttes selon la revendication 5, caractérisé par au moins une tige pendulaire (9), articulée au cadre et à un dispositif de fixation à l'arrivée de gaz ou à une couverture de l'arrivée de gaz.

7. Séparateur de gouttes selon la revendication 5, caractérisé par un dispositif de déplacement relié au cadre et fixé à l'arrivée de gaz.

8. Séparateur de gouttes selon l'une des revendications 5 à 7, caractérisé en ce que le cadre est relié à la commande linéaire par l'intermédiaire d'une tringle de commande (12) qui traverse la paroi de l'arrivée de gaz au travers d'un presse-étoupe (13).

9. Séparateur de gouttes selon l'une des revendications 5 à 8, caractérisé en ce que l'arrivée d'eau de lavage se ramifie dans des raccords (19) munis extérieurement de soupapes, les tuyaux flexibles (18) étant reliés aux raccords (19).

10. Séparateur de gouttes selon l'une des revendications 5 à 9, caractérisé en ce que deux ou plusieurs lances (14) sont reliées entre elles par des tuyaux de raccordement (17), les tuyaux flexibles (18) étant reliés aux tuyaux de raccordement (17).

11. Séparateur de gouttes selon l'une des revendications 5 à 10, caractérisé en ce que les buses à jet plan (15) sont équipées d'ajutages (22) en forme d'entonnoir plat.

12. Séparateur de gouttes selon l'une des revendications 5 à 11, caractérisé en ce que les buses à jet plan (15) sont réglables selon un angle d'écoulement de 0 à 15°.

13. Séparateur de gouttes selon l'une des revendications 5 à 12, caractérisé en ce que les buses à jet plan (15) sont disposées sur des potences (16) dirigées vers le haut.
